# FASCICULE DE BREVET EUROPEEN

(11) **EP 2 494 489 B1**
(45) Date de publication et mention de la délivrance du brevet: **28.02.2018**
(21) Numéro de dépôt: 10785152.9
(22) Date de dépôt: 21.10.2010
(51) Int. Cl.: G06F 21/10

(54) **PROCÉDÉ ET AGENT CLIENT POUR CONTRÔLER L'UTILISATION D'UN CONTENU PROTÉGÉ**
VERFAHREN UND CLIENT-AGENT ZUR ÜBERWACHUNG DER VERWENDUNG VON GESCHÜTZTEM INHALT
METHOD AND CLIENT AGENT FOR MONITORING THE USE OF PROTECTED CONTENT

(30) Priorité: 26.10.2009 FR 0957498
(43) Date de publication de la demande: 05.09.2012
(73) Titulaire: Orange, 75015 Paris (FR)
(72) Inventeur: VIVOLO, Olivier, F-35000 Rennes (FR); BECKER, Claudia, F-35000 Rennes (FR)
(86) Numéro de dépôt international: PCT/FR2010/052244
(87) Numéro de publication internationale: WO 2011/051595

(56) Documents cités:
- WO-A2-2007/074431
- WO-A2-2008/083163
- DE-A1- 10 156 877
- US-A- 6 038 367
- US-A1- 2002 010 679
- US-A1- 2006 129 490
- US-A1- 2008 082 448

## Description

L'invention concerne un procédé et un agent client pour contrôler l'utilisation d'un contenu protégé associé à une licence de gestion de droits numériques.

Une licence de gestion de droits numériques, ou licence "DRM" (Digital Rights Management), associée à un contenu protégé par chiffrement, est une structure de données contenant généralement :
- un identifiant permettant de faire le lien entre la licence et le contenu auquel elle se rapporte;
- une clé cryptographique permettant de déchiffrer le contenu;
- une ou plusieurs conditions d'utilisation du contenu.

Les conditions d'utilisation du contenu peuvent comprendre un nombre maximal d'utilisation du contenu, une fenêtre temporelle durant laquelle le contenu peut être utilisé, un nombre de transferts autorisés du contenu entre différents terminaux, etc. Afin d'utiliser un contenu protégé et associé à une licence DRM à l'aide d'un terminal, un agent client DRM situé dans le terminal vérifie au préalable si les conditions d'utilisation sont satisfaites. Si tel est le cas, l'agent client DRM fournit généralement la clé cryptographique présente dans la licence à un module de déchiffrement qui déchiffre alors le contenu.

Par ailleurs, il existe des applications de gestion de contrôle parental. Une application de gestion de contrôle parental permet de restreindre automatiquement l'accès à certains contenus, afin de protéger certains utilisateurs contre des contenus inappropriés. Il existe différents types d'applications de gestion de contrôle parental. Une application selon un premier type est configurée pour appliquer la législation en termes de contrôle parental. Une application selon un deuxième type est gérée par les parents afin de leur permettre de restreindre automatiquement l'accès à certains contenus pour leurs enfants. Dans ce cas, l'application est paramétrée par les parents qui définissent des critères parentaux applicables à leurs enfants. Les contenus sont caractérisés par des informations relatives à leur nature qui peuvent comprendre par exemple des niveaux en matière de violence, de nudité et de sexe. Lorsqu'un utilisateur demande à accéder à un contenu donné, l'application de gestion de contrôle parental peut fournir à l'utilisateur des informations sur la nature du contenu, c'est-à-dire sur les niveaux du contenu en matière de violence, de nudité et de sexe. Puis, si les critères parentaux requièrent que l'utilisateur ait une certaine maturité pour accéder à ce contenu, l'application peut lui demander de prouver qu'il est suffisamment mature en lui demandant soit de saisir un code parental confidentiel, soit de s'identifier avec un compte utilisateur considéré comme suffisamment mature, soit de fournir des coordonnées de carte bancaire, soit de fournir des données d'identification, etc. L'application de gestion de contrôle parental détermine ensuite si l'utilisation du contenu par l'utilisateur considéré est autorisée ou non, en fonction de la preuve apportée.

Les systèmes DRM permettent de contrôler l'utilisation de contenus en fonction de droits numériques attachés à ces contenus, alors que les applications de gestion de contrôle parental permettent de contrôler l'utilisation d'un contenu en fonction de critères parentaux. Ces deux systèmes sont bien distincts et non compatibles. En particulier, il n'est actuellement pas possible de faire du contrôle parental de façon simple sur un contenu protégé et géré par une licence DRM.

Le document WO 2008/083163 décrit un système *(VPE* - *Viewing Policy Engine)* de contrôle de l'accès à des contenus chiffrés et stockés sur un disque média connecté à un lecteur. Lorsqu'un utilisateur veut lire un contenu stocké sur le disque média, le système de contrôle vérifie un ensemble de conditions avant d'autoriser ou de refuser la lecture du contenu. Ces conditions peuvent comprendre une condition relative à la date courante, celle-ci devant être postérieure à une date de sortie, une condition d'abonnement valide, une condition relative au nombre de fois où le contenu a été lu, ce nombre devant être inférieur à un nombre maximum. En outre, si le contenu est interdit aux enfants dont l'âge est inférieur à une limite d'âge donnée, il est prévu de demander la saisie d'un mot de passe. Ainsi, le document WO 2008/083163 prévoit, pour l'accès à un contenu chiffré, de vérifier différents critères d'accès (date de sortie, abonnement, etc.) et de réaliser une opération de contrôle parental. En définitive, ce document propose qu'un même système de contrôle à la fois vérifie des critères d'accès au contenu et réalise une opération de contrôle parental auprès de l'utilisateur souhaitant accéder au contenu. Ce système impose cependant à l'utilisateur d'utiliser le module de contrôle parental spécifique au système de contrôle, ce qui manque de souplesse.

La présente invention vient améliorer la situation.
A cet effet, l'invention concerne un procédé d'obtention et de contrôle de l'utilisation d'un contenu par un terminal, ledit terminal comprenant un agent client de contrôle de l'utilisation du contenu, dans lequel
- en réponse à une requête transmise à un serveur, le terminal reçoit ledit contenu sous forme chiffrée ainsi qu'une licence associée de gestion de droits numériques, ladite licence contenant des conditions d'utilisation du contenu,
- en cas de commande de lecture dudit contenu, l'agent client de contrôle vérifie les conditions d'utilisation du contenu, présentes dans la licence,
caractérisé par le fait que
- le terminal transmet au serveur un identifiant de module de gestion de contrôle parental,
- la licence reçue, associée au contenu, contient
   ∘ une condition subordonnant l'utilisation du contenu à la réalisation préalable d'une opération de contrôle parental et
   ∘ l'identifiant dudit module de gestion de contrôle parental transmis,
- lors de la vérification des conditions d'utilisation du contenu, l'agent client de contrôle détermine que l'utilisation du contenu est subordonnée à une obligation de réaliser une opération de contrôle parental sur le contenu et, à l'aide de l'identifiant du module de gestion de contrôle parental extrait de la licence, il transmet une demande d'autorisation pour utiliser le contenu au module de gestion de contrôle parental,
- le module de gestion de contrôle parental réalise une opération de contrôle parental sur ledit contenu et transmet un résultat du contrôle parental à l'agent de contrôle afin d'autoriser ou refuser la lecture du contenu selon que le résultat est positif ou négatif.

Selon l'invention, l'une des conditions d'utilisation du contenu présentes dans la licence associée au contenu est une condition subordonnant l'utilisation du contenu à la réalisation d'une opération de contrôle parental. Ainsi, la vérification des conditions d'utilisation d'un contenu déclenche la réalisation de l'opération de contrôle parental. En outre, le terminal transmet au serveur l'identifiant d'un module de contrôle parental et reçoit en réponse le contenu et une licence générée spécifiquement pour le terminal et contenant l'identifiant de module de contrôle parental préalablement transmis. Cela permet une gestion plus souple de l'utilisation des modules de contrôle parental. Le terminal peut aisément changer de module de contrôle parental. Il lui suffit de transmettre un identifiant du nouveau module de contrôle parental choisi au serveur pour que celui-ci génère, suite à une demande ultérieure de contenu, une licence associée contenant l'identifiant de ce nouveau module de contrôle parental.

Dans un premier mode de réalisation, l'identifiant de module de gestion de contrôle parental est présent dans la requête transmise par le terminal au serveur pour obtenir le contenu.

Dans un deuxième mode de réalisation, l'identifiant de module de gestion de contrôle parental est transmis par le terminal au serveur lors d'une étape préalable de configuration et est stocké par le serveur dans une base de données en vue de répondre à des requêtes ultérieures du terminal pour recevoir des contenus.

Avantageusement, il est prévu une étape d'authentification du module de gestion de contrôle parental par l'agent client de contrôle de l'utilisation du contenu.

L'invention concerne aussi un terminal de communication comprenant
- des moyens de communication avec un serveur agencés pour transmettre au serveur une requête pour obtenir un contenu et pour recevoir, en réponse, le contenu sous forme chiffrée ainsi qu'une licence associée de gestion de droits numériques contenant des conditions d'utilisation du contenu,
- des moyens de lecture du contenu et
- un agent de contrôle de l'utilisation du contenu, agencé en cas de commande de lecture dudit contenu par les moyens de lecture, pour vérifier les conditions d'utilisation du contenu, présentes dans la licence,
caractérisé par le fait que
- les moyens de communication sont agencés pour transmettre au serveur un identifiant de module de gestion de contrôle parental,
- la licence reçue, associée au contenu, contenant une condition subordonnant l'utilisation du contenu à la réalisation préalable d'une opération de contrôle parental et l'identifiant dudit module de gestion de contrôle parental transmis par le terminal au serveur, l'agent client de contrôle est agencé pour
   ∘ déterminer que l'utilisation du contenu est subordonnée à une obligation de réaliser une opération de contrôle parental sur le contenu et
   ∘ transmettre une demande d'autorisation pour utiliser le contenu au module de gestion de contrôle parental, identifié par l'identifiant du module de gestion de contrôle parental extrait de la licence,
   ∘ autoriser ou refuser la lecture du contenu par les moyens de lecture selon que le résultat du contrôle parental est positif ou négatif.

L'invention sera mieux comprise à l'aide de la description suivante de plusieurs exemples de réalisation du procédé pour contrôler l'utilisation d'un contenu protégé associé à une licence de gestion de droits numériques et de l'agent client de contrôle, selon l'invention, en référence aux dessins annexés sur lesquels :
- la figure 1 représente un vue schématique d'un système de transmission de contenus;
- les figures 2A et 2B représentent des organigrammes des étapes du procédé selon un exemple de réalisation particulier de l'invention,
- la figure 3 représente un schéma bloc fonctionnel d'un terminal d'utilisateur de la figure 1,
- la figure 4 représente un schéma bloc fonctionnel d'un agent client DRM du terminal de la figure 3.

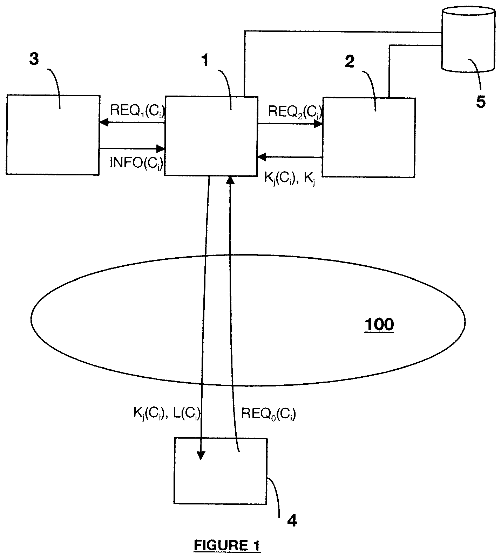

Sur la figure 1, on a représenté un système de transmission de contenus comprenant un serveur 1 de téléchargement de contenus et de licences de gestion de droits numériques associées, un équipement de chiffrement 2 et un serveur 3 de gestion de contrôle parental.

Le serveur 1 de téléchargement de contenus Cᵢ et de licences L(Cᵢ) de gestion de droits numériques associées, ou licences DRM (Digital Right Management), est adapté pour transmettre des contenus protégés par chiffrement et des licences DRM associées à ces contenus vers des terminaux d'utilisateur, à travers un réseau de communication 100, ici l'Internet. Il est relié à une base de données 5 de contenus Cᵢ en clair (avec i >0).

L'équipement de chiffrement 2, également relié à la base de données 5 de contenus, est destiné à recevoir des requêtes de chiffrement de contenus Cᵢ en provenance du serveur de téléchargement 1. Chaque requête contient ici un identifiant du contenu demandé permettant d'identifier ce contenu dans la base de données 5. En variante, on pourrait envisager que le serveur de téléchargement 1 transmette le contenu en clair avec la requête de chiffrement. Dans ce cas, il ne serait pas nécessaire de relier l'équipement de chiffrement 2 à la base de données 5.

Sur réception d'une requête de chiffrement d'un contenu donné Cᵢ, l'équipement de chiffrement 2 est agencé pour générer une clé cryptographique Kⱼ (avec j>0), chiffrer le contenu Cᵢ avec cette clé Kⱼ puis transmettre au serveur de téléchargement 1 le contenu Cᵢ sous forme chiffrée, noté Kⱼ(Cᵢ), et la clé Kⱼ.

Le serveur 3 de gestion de contrôle parental est agencé pour fournir au serveur de téléchargement 1 des informations sur la nature des contenus. Ces informations peuvent comprendre
- le niveau de maturité requis pour utiliser le contenu tel que, par exemple, contenu interdit au moins de 18 ans et/ou
- des niveaux, ou degrés, caractérisant le contenu relativement à des critères parentaux spécifiques, par exemple dans l'exemple particulier décrit ici des critères de violence, de nudité et de sexe. Un ensemble de niveaux est défini pour chaque critère parental. En l'espèce, le critère de violence (respectivement de nudité et de sexe) est associé à cinq niveaux de violence (respectivement de nudité et de sexe). Le premier niveau correspond à un niveau nul de violence (respectivement de nudité et de sexe), le second niveau à un niveau faible de violence (respectivement de nudité et de sexe), le troisième niveau à un niveau moyen de violence (respectivement de nudité et de sexe), le quatrième niveau à un niveau élevé de violence (respectivement de nudité et de sexe) et le cinquième niveau à un niveau très élevé de violence (respectivement de nudité et de sexe).

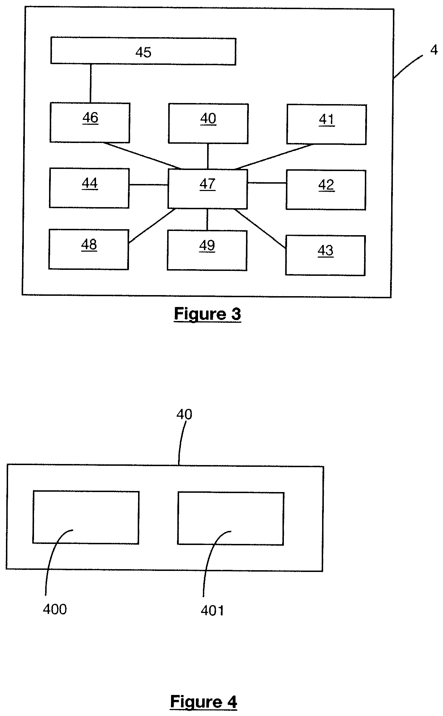

Sur la figure 1, on a également représenté un terminal d'utilisateur 4. Ce terminal 4 est apte à communiquer avec le serveur de téléchargement 1 à travers l'Internet 100. En référence à la figure 3, le terminal 4 comprend un agent client DRM 40, un module 41 de gestion de contrôle parental, un module de déchiffrement 42, un module 43 de lecture de contenus, une interface utilisateur 44, une interface 45 de connexion à l'Internet 100 et un navigateur Internet 46. Le terminal 4 comprend également une mémoire 48 destinée à stocker des contenus et leurs licences DRM associées et une mémoire 49 destinée à stocker des informations d'utilisateur. Une unité centrale de commande 47, à laquelle tous les éléments du terminal sont connectés, est destinée à contrôler le fonctionnement du terminal 4.

En référence à la figure 4, l'agent client DRM 40 comprend un module de communication 400 et un module 401 de vérification de conditions d'une licence DRM. En outre, l'agent client DRM 40 a accès à la mémoire 48 du terminal 4, dans laquelle sont stockés des contenus et leurs licences DRM associées.

Le module de communication 400 est adapté pour
- recevoir une demande d'autorisation d'utilisation d'un contenu en provenance du module de lecture 43 du terminal 4,
- dans le cas où l'utilisation du contenu est subordonnée à la réalisation d'une opération de contrôle parental, transmettre une demande d'autorisation pour utiliser le contenu au module 41 de gestion de contrôle parental identifié par son identifiant unique, par exemple un GUID (pour *Global Unique Identifier* en anglais), extrait de la licence DRM associée, cette demande contenant des informations relatives à la nature du contenu, également extraites de la licence,
- après réalisation d'une opération de contrôle parental sur le contenu par le module 41 de gestion de contrôle parental, recevoir en provenance du module 41 une réponse contenant le résultat du contrôle parental,
- transmettre au module de lecture 43 un message d'autorisation d'utilisation du contenu ici uniquement dans le cas où le résultat du contrôle parental est positif et les conditions de licence relatives aux droits numériques sur le contenu sont satisfaites.

Dans le cas où le résultat du contrôle parental est négatif ou dans le cas où les conditions de licence relatives aux droits numériques sur le contenu ne sont pas satisfaites, le module de communication 400 de l'agent client DRM 40 est adapté pour ne pas répondre à la demande d'autorisation d'utilisation du contenu émise par le module de lecture 43, afin de notifier son refus d'utilisation du contenu au module de lecture 43. Dans ce cas, le module de lecture 43 est adapté pour interpréter cette absence de réponse, à l'expiration d'une durée prédéfinie, comme un refus d'utilisation du contenu. En variante, le module de communication 400 pourrait être adapté pour transmettre un message de refus d'utilisation du contenu pour notifier ce refus au module de lecture 43.

Le module de vérification 401 est adapté pour vérifier les conditions d'utilisation d'un contenu présentes dans la licence DRM associée à ce contenu, sur réception d'une demande d'autorisation d'utilisation de ce contenu en provenance du module de lecture 43 du terminal 4. Le module 401 est adapté pour vérifier les conditions de licence relatives aux droits numériques sur le contenu de façon connue. En outre, dans le cas où la licence DRM du contenu contient une condition de contrôle parental, le module 401 est apte à déterminer que l'utilisation de ce contenu est subordonnée à une obligation de réaliser une opération de contrôle parental sur le contenu et, dans ce cas, déclencher un dialogue entre l'agent DRM 40 et le module 41 de gestion de contrôle parental pour commander la réalisation d'une opération de contrôle parental et recevoir le résultat de cette opération.

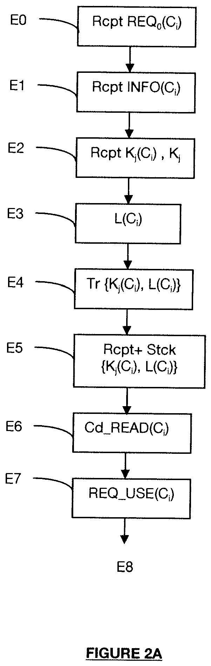

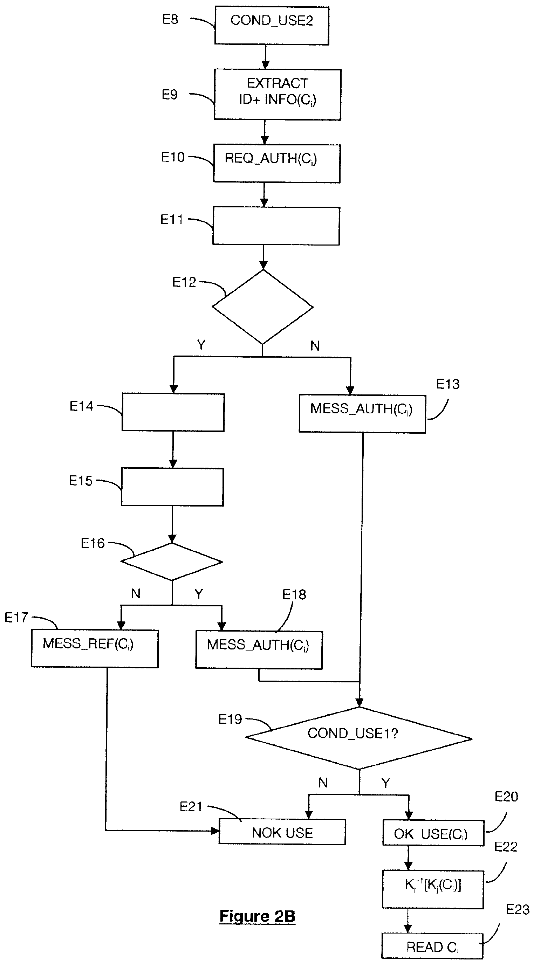

On va maintenant décrire le téléchargement et la lecture d'un contenu Cᵢ par le terminal d'utilisateur 4, en référence aux figures 2A et 2B. Dans l'exemple particulier décrit ici, le contenu Cᵢ est un contenu vidéo, tel qu'un film.

En référence à la figure 2A, lors d'une étape E0, le terminal 4 transmet au serveur de téléchargement 1, à travers l'Internet 100, une requête REQ₀(Cᵢ) de téléchargement du contenu Cᵢ et d'une licence DRM associée, notée L(Cᵢ). La requête de téléchargement REQ₀(Cᵢ) contient ici un identifiant de module client 41 de gestion de contrôle parental du terminal 1. En l'espèce, le module 41 étant un composant logiciel, l'identifiant de ce module 41 est l'identifiant unique de ce composant logiciel. En variante, le serveur de téléchargement 1 pourrait déterminer l'identifiant unique du module 41 de contrôle parental du terminal 4 lors d'une étape préalable de configuration, lors de laquelle le terminal 4 transmettrait l'identifiant du module 41 au serveur, et stocker cet identifiant dans une base de données de terminaux clients en vue de répondre aux requêtes ultérieures du terminal 4 de téléchargement de contenus.

Lors d'une étape E1, le serveur de téléchargement 1 obtient, en réponse à une requête REQ₁(Cᵢ) adressée au serveur de contrôle parental 3, des informations sur la nature du contenu Cᵢ, notée INFO(Cᵢ). Ces informations INFO(Cᵢ) comprennent ici des niveaux caractérisant le contenu par rapport aux critères parentaux de violence, de nudité ou de sexe.

Lors d'une étape E2, le serveur de téléchargement 1 obtient, en réponse à une requête REQ₂(Cᵢ) adressée à l'équipement de chiffrement 2, le contenu Cᵢ sous forme chiffrée à l'aide d'une clé cryptographique de chiffrement/déchiffrement, noté Kⱼ(Cᵢ), ainsi que la clé Kⱼ utilisée pour chiffrer le contenu Cᵢ.

Les étapes E1 et E2 sont ici réalisées suite à la réception de la requête de téléchargement REQ₀(Cᵢ) par le serveur de téléchargement 1. L'ordre dans lequel ces deux étapes sont réalisées est indifférent, l'étape E2 pouvant être réalisée avant l'étape E1. En variante, les étapes E1 et E2 pourraient également être réalisées avant la réception de la requête de téléchargement REQ₀(Cᵢ) du terminal utilisateur.

Lors d'une étape E3, le serveur de téléchargement 1 génère une licence DRM L(Cᵢ) pour le contenu Cᵢ. Cette licence L(Cᵢ) est une structure de données contenant les éléments suivants :
- un identifiant Idᵢ permettant de faire le lien entre la licence L(Cᵢ) et le contenu Cᵢ,
- la clé Kⱼ de déchiffrement du contenu Cᵢ,
- des conditions d'utilisation du contenu Cᵢ.

Les conditions d'utilisation du contenu Cᵢ contiennent deux types de conditions
- des conditions relatives à la gestion de droits numériques d'utilisation du contenu, notées COND_USE1, telles un nombre maximal d'utilisation du contenu, une fenêtre temporelle durant laquelle le contenu peut être utilisé, un nombre de transferts autorisés du contenu entre différents terminaux, etc., et
- une condition, notée COND_USE2, subordonnant l'utilisation du contenu à la réalisation préalable d'une opération de contrôle parental.

Cette dernière condition COND_USE2 contient
- une indication selon laquelle l'utilisation du contenu Cᵢ est subordonnée à la réalisation préalable d'une opération de contrôle parental;
- des informations sur la nature du contenu Cᵢ, correspondant aux informations INFO(Cᵢ) fournies par le serveur de contrôle parental 3 pour le contenu Cᵢ,
- l'identifiant unique du module 41 de gestion de contrôle parental du terminal 4.

Cette licence DRM L(Cᵢ) peut être stockée sur un support d'enregistrement. En l'espèce, elle est destinée à être transmise à un terminal destinataire et à être stockée dans une mémoire de ce terminal.

Lors d'une étape E4, en réponse à la requête de téléchargement REQ₀(Cᵢ), le serveur de téléchargement 1 transmet au terminal 4 le contenu Cᵢ sous forme chiffrée à l'aide de la clé Kⱼ, à savoir Kⱼ(Cᵢ), et la licence DRM L(Cᵢ) associée à ce contenu Cᵢ.

Lors d'une étape E5, le terminal 4 reçoit et stocke dans une mémoire locale 48 le contenu Cᵢ sous forme chiffrée, Kⱼ(Cᵢ), et la licence DRM associée L(Cᵢ).

Lors d'une étape E6 ultérieure, un utilisateur saisit à l'aide de l'interface utilisateur 44 du terminal 5 une commande de lecture du contenu Cᵢ.

Sur réception de la commande de lecture du contenu Cᵢ saisie, notée Cd_READ(Cᵢ), le module de lecture 43 adresse une demande d'utilisation du contenu Cᵢ, notée REQ_USE(Cᵢ), à l'agent client DRM 40, lors d'une étape E7.

On va maintenant décrire, en référence à la figure 2B, le procédé mis en oeuvre par l'agent client DRM 40 et par le module 41 de gestion de contrôle parental pour contrôler l'utilisation du contenu protégé Cᵢ associé à la licence DRM L(Cᵢ), suite à la réception de la demande REQ_USE(Cᵢ) d'utilisation du contenu Cᵢ lors de l'étape E7.

Sur réception de la demande REQ_USE(Cᵢ) d'utilisation du contenu Cᵢ, l'agent DRM 40 déclenche la vérification des conditions d'utilisation du contenu Cᵢ, présentes dans la licence L(Cᵢ), en l'espèce les conditions COND_USE1 relatives aux droits numériques attachés au contenu Cᵢ et la condition COND_USE2 relative au contrôle parental.

Lors d'une étape E8, il est d'abord déterminé que l'utilisation du contenu Cᵢ est subordonnée à une obligation COND_USE2 de réaliser une opération de contrôle parental sur le contenu Cᵢ.

Lors d'une étape E9, l'agent DRM 40 extrait de la licence L(Cᵢ) l'identifiant unique du module 41 de contrôle parental et les informations INFO(Cᵢ) sur la nature du contenu Cᵢ.

Puis, lors d'une étape E10, à l'aide de l'identifiant extrait de la licence L(Cᵢ), l'agent DRM 40 transmet une demande d'autorisation pour utiliser le contenu, notée REQ_AUTH(Cᵢ), au module 41 de gestion de contrôle parental. La demande REQ_AUTH(Cᵢ) contient les informations INFO(Cᵢ) sur la nature du contenu Cᵢ extraites de la licence L(Cᵢ).

Lors d'une étape E11, le module 41 de gestion du contrôle parental informe l'utilisateur sur le fait que le contenu demandé a certains niveaux relatifs aux critères parentaux prédéfinis (ici violence, nudité et sexe), par l'intermédiaire de l'interface utilisateur 44.

Par ailleurs, le module 41 de gestion de contrôle parental détermine si les niveaux du contenu Cᵢ relatifs aux critères parentaux requièrent une certaine maturité de l'utilisateur, lors d'une étape de test E12. Dans l'exemple décrit ici, tel est le cas si au moins l'un des niveaux est supérieur ou égal à deux.

Si le test E12 est négatif (branche N suite à l'étape E12), autrement dit si le contenu Cᵢ peut être utilisé sans restriction d'âge de l'utilisateur, le module 41 de gestion de contrôle parental transmet à l'agent DRM 40, en réponse à la demande d'autorisation REQ_AUTH(Cᵢ), un message d'autorisation d'utilisation du contenu Cᵢ, noté MESS_AUTH(Cᵢ), lors d'une étape E13.

Si le test E12 est positif (branche Y suite à l'étape E12), autrement dit si le contenu Cᵢ peut être utilisé à condition que l'utilisateur ait une certaine maturité, le module 41 demande à l'utilisateur de prouver qu'il est suffisamment mature pour le contenu Cᵢ lors d'une étape E14.

Lors d'une étape E15, l'utilisateur saisit des informations destinées à prouver sa maturité à l'aide de l'interface utilisateur 44. Ces informations de preuve de maturité peuvent comprendre, à titre d'exemples illustratifs, un code parental confidentiel, des coordonnées de carte bancaire, des données d'identification correspondant à un compte utilisateur considéré comme suffisamment mature, ou tout autre information de nature à prouver une certaine maturité de l'utilisateur.

En variante, au lieu de demander à l'utilisateur de saisir des informations destinées à prouver sa maturité, le module 41 de gestion de contrôle parental pourrait utiliser des informations relatives à l'utilisateur, destinées à prouver sa maturité, gardées en mémoire, par exemple sous la forme de "cookies" (ou "témoins"). Dans ce cas, les étapes E14 et E15 pourraient ne pas être mises en oeuvre.

Lors d'une étape de test E16, le module 41 de gestion de contrôle parental vérifie l'exactitude des informations de preuve de maturité fournies par l'utilisateur. Cette vérification est faite par comparaison des informations saisies avec des informations d'utilisateur pré-stockées dans une mémoire 49 du terminal 4. Le module 41 détermine ainsi si l'utilisateur a apporté la preuve d'une maturité suffisante pour lire le contenu Cᵢ.

Si l'étape de test E16 est négative (branche N suite à l'étape E16), autrement dit si les informations fournies par l'utilisateur ne permettent pas de prouver que l'utilisateur a une maturité suffisante pour lire le contenu Cᵢ, le résultat du contrôle parental est négatif. Dans ce cas, le module 41 de gestion de contrôle parental notifie à l'agent DRM 40 un refus d'utilisation du contenu Cᵢ. Ce refus peut être communiqué par la transmission du module 41 de contrôle parental à l'agent DRM 40 d'un message de refus, noté MESS_REF(Cᵢ), en réponse à la demande REQ_AUTH(Cᵢ) d'autorisation d'utilisation du contenu Cᵢ, lors d'une étape E17. En variante, le refus d'utilisation du contenu Cᵢ pourrait être notifié par le module de contrôle parental 41 à l'agent DRM 40 par une absence de réponse à la demande REQ_AUTH(Cᵢ) d'autorisation d'utilisation du contenu Cᵢ à l'expiration d'un délai d'attente, ou time-out, prédéfini.

L'étape E17 est suivie d'une étape E21, décrite plus loin, de notification d'un refus d'utilisation du contenu Cᵢ par l'agent DRM 40 au module de lecture 43. Lors de cette étape E21, l'agent DRM 40 informe le module de lecture 43 qu'il refuse l'utilisation par ce dernier du contenu Cᵢ.

Si l'étape de test E16 est positive (branche Y suite à l'étape E16), autrement dit si les informations fournies par l'utilisateur permettent de prouver que l'utilisateur a une maturité suffisante pour lire le contenu Cᵢ, le résultat du contrôle parental est positif. Dans ce cas, le module 41 de gestion de contrôle parental transmet à l'agent DRM 40 un message d'autorisation d'utilisation du contenu Cᵢ, MESS_AUTH(Cᵢ), en réponse à la demande REQ_AUTH(Cᵢ) d'autorisation d'utilisation du contenu Cᵢ, lors d'une étape E18.

Suite à chacune des étapes E13 et E18 d'envoi d'un message d'autorisation d'utilisation du contenu Cᵢ, MESS_AUTH(Cᵢ) par le module 41 de contrôle parental à l'agent DRM 40, l'agent client DRM 40 vérifie, de façon connue, les conditions d'utilisation COND_USE1 relatives à la gestion des droits numériques attachés au contenu Cᵢ, lors d'une étape E19.

S'il est déterminé à l'étape E19, subséquente à l'étape E13 ou E18, que les conditions COND_USE1 sont satisfaites (branche Y suite à l'étape E19), l'agent DRM 40 autorise le module de lecture 43 à utiliser le contenu Cᵢ, en réponse à la demande d'utilisation REQ_USE(Cᵢ). Pour cela, l'agent DRM 40 transmet au module de lecture 43 un message d'accord d'utilisation du contenu Cᵢ, noté OK_USE(Cᵢ), lors d'une étape E20. Le message OK_USE(Cᵢ) contient la clé Kⱼ de déchiffrement du contenu Cᵢ.

S'il est déterminé à l'étape E19 que les conditions C0ND_USE1 ne sont pas satisfaites (branche N suite à l'étape E19), l'étape E19 est suivie de l'étape E21 de notification d'un refus d'utilisation du contenu Cᵢ par l'agent DRM 40 au module de lecture 43. Lors de cette étape E21, subséquente à l'étape E17 ou E19, l'agent DRM 40 informe le module de lecture 43 de son refus d'utilisation du contenu Cᵢ par le module de lecture 43 ici en s'abstenant de répondre à la demande d'utilisation REQ_USE(Cᵢ) initiale du module de lecture 43. L'absence de réponse à la demande d'utilisation du contenu Cᵢ REQ_USE(Cᵢ) de la part de l'agent DRM 40 à l'expiration d'un délai d'attente, ou time-out, prédéterminé est interprétée par le module de lecture 43 comme la notification d'un refus implicite d'utilisation du contenu Cᵢ. En variante, pour notifier le refus d'utilisation du contenu Cᵢ au module de lecture 43, l'agent DRM 40 pourrait transmettre au module de lecture 43 un message explicite de refus d'utilisation du contenu Cᵢ, noté NOK_USE(Cᵢ), en réponse à la demande d'utilisation REQ_USE(Cᵢ).

Suite à l'étape E20, sur requête du module de lecture 43, le module de déchiffrement 42 déchiffre le contenu protégé Kⱼ(Cᵢ) à l'aide de la clé Kⱼ contenue dans la licence L(Cᵢ), lors d'une étape E22. Puis, lors d'une étape E23, le module de lecture 43 lit le contenu Cᵢ demandé par l'utilisateur.

Dans la description qui précède, la condition COND-USE2 est vérifiée avant les conditions COND_USE1. Dans une variante de réalisation, les conditions COND_USE1 relatives à la gestion de droits numériques d'utilisation du contenu sont vérifiées avant la condition COND_USE2 subordonnant l'utilisation du contenu à la réalisation préalable d'une opération de contrôle parental. Selon cette variante, les étapes E19-E21 sont mises en oeuvre avant les étapes E8-E18.

Dans un autre mode de réalisation, la liaison entre l'agent client DRM 40 et le module 41 de gestion de contrôle parental est sécurisée. Cette sécurisation a pour objectif principal de garantir l'origine et l'intégrité des données échangées entre les deux composants 40 et 41. En particulier, un but de cette sécurisation est de permettre à l'agent client DRM 40 d'authentifier les données transmises par le module 41 de gestion de contrôle parental. Différentes techniques sont envisageables pour sécuriser le lien entre les deux composants 40 et 41.

Une première technique repose sur un secret partagé entre l'agent DRM 40 et le module 41 de gestion de contrôle parental. Par exemple, le module 41 de gestion de contrôle parental possède un secret k et la licence L(Cᵢ) du contenu Cᵢ contient une information apte à permettre à l'agent DRM de retrouver ce secret k. Cette information est soit le secret k lui-même, soit une donnée de diversification qui permet à partir d'un germe connu de l'agent DRM 40 de retrouver le secret k. En variante, le secret k peut être stocké dans l'agent DRM 40 et dans le module 41 de gestion de contrôle parental lors d'une phase de configuration. Ce secret k peut être utilisé lors des échanges entre l'agent DRM 40 et le module 41 de gestion de contrôle parental soit pour chiffrer les messages échangés, soit pour réaliser des sommes de contrôle cryptographiques, plus couramment appelés "checksums" cryptographiques, à partir des messages échangés.

Une deuxième technique repose sur l'utilisation d'un certificat associé au module 41 de gestion de contrôle parental, contenant une clé publique Kpub détenue par le module 41. Une clé privée Kpr, associée à cette clé publique, est mémorisée par le module de contrôle parental 41. Dans ce cas, la licence L(Cᵢ) du contenu Cᵢ peut contenir le certificat du module 41 de contrôle parental. Lors des échanges entre l'agent DRM 40 et le module de contrôle parental 41, celui-ci peut signer avec sa clé privée Kpr les messages transmis à l'agent DRM 40. L'agent DRM 40 peut ensuite vérifier la signature des messages à l'aide de la clé publique Kpub. Ainsi, l'agent DRM 40 peut authentifier l'origine des messages reçu en provenance du module de contrôle parental 41.

On pourrait envisager d'autres techniques pour protéger le lien entre l'agent DRM 40 et l'application de contrôle parental 41 et permettre au moins à l'agent DRM 40 d'authentifier l'origine des messages qu'il reçoit lors de ses échanges avec le module de contrôle parental 41.

Dans la description qui précède, les informations INFO(Cᵢ) sur la nature du contenu Cᵢ et l'identifiant unique du module 41 de gestion de contrôle parental sont contenues dans la licence DRM L(Cᵢ). En variante, les informations sur la nature du contenu Cᵢ pourraient être contenues dans le contenu Cᵢ lui-même, par exemple dans des métadonnées présentes dans le contenu Cᵢ. De même, l'identifiant du module 41 de gestion de contrôle parental pourrait être contenu dans le contenu lui-même.

Au lieu d'être stockées localement dans le terminal, les informations d'utilisateur destinées à être utilisées lors de l'étape de test E16 pour vérifier l'exactitude des informations de preuve de maturité saisies par l'utilisateur pourraient être stockées dans une base de données distante située dans un serveur distant. Dans ce cas, lors de l'étape E16, le module 41 de gestion de contrôle parental serait adapté pour dialoguer avec ce serveur distant à travers l'Internet et interroger cette base de données distante afin de vérifier l'exactitude des informations fournies par l'utilisateur.

Dans une autre variante de réalisation, l'agent client DRM pourrait transmettre la demande d'autorisation REQ_AUTH (Cᵢ) pour utiliser le contenu vers un module de gestion de contrôle parental hébergé par un serveur distant, à travers un réseau de communication.

Dans la description qui précède, les informations sur la nature du contenu INFO(Cᵢ) sont fournies au module 41 de contrôle parental par l'agent DRM 40. En variante, le module 41 de contrôle parental pourrait récupérer ces informations sur la nature du contenu en interrogeant une base de données locale ou distante (à travers l'Internet 100).

On pourrait envisager que la clé Kⱼ de déchiffrement du contenu C ne soit pas contenu dans la licence DRM L(Cᵢ) associée au contenu, mais qu'elle stockée dans le terminal 4 par un autre moyen.

## Revendications

1. Procédé d'obtention et de contrôle de l'utilisation d'un contenu (Cᵢ) par un terminal, ledit terminal comprenant un agent client (40) de contrôle de l'utilisation du contenu, dans lequel
- en réponse à une requête transmise à un serveur, le terminal (4) reçoit ledit contenu (Cᵢ) sous forme chiffrée ainsi qu'une licence (L(Cᵢ)) associée de gestion de droits numériques, ladite licence (L(Cᵢ)) contenant des conditions (COND_USE1, COND_USE2) d'utilisation du contenu (Cᵢ),
- en cas de commande de lecture dudit contenu, l'agent client de contrôle (40) vérifie (E12, E14-E16, E19) les conditions d'utilisation du contenu, présentes dans la licence (L(Cᵢ)),
- le terminal transmet au serveur un identifiant de module logiciel (41) de gestion de contrôle parental,
- la licence reçue (L(Cᵢ)), associée au contenu (Cᵢ), contient
∘ une condition subordonnant l'utilisation du contenu (Cᵢ) à la réalisation préalable d'une opération de contrôle parental et
∘ l'identifiant dudit module de gestion de contrôle parental transmis,
- lors de la vérification des conditions d'utilisation du contenu, l'agent client de contrôle (40) détermine que l'utilisation du contenu (Cᵢ) est subordonnée à une obligation (COND_USE1) de réaliser une opération de contrôle parental sur le contenu (Cᵢ) et, à l'aide de l'identifiant du module de gestion de contrôle parental extrait de la licence (L(Cᵢ)), il transmet une demande d'autorisation (REQ_AUTH(Cᵢ)) pour utiliser le contenu (Cᵢ) au module de gestion de contrôle parental (41), ladite requête comprenant des informations sur la nature du contenu, extraites par l'agent client de contrôle du contenu ou de la licence,
- le module (41) de gestion de contrôle parental réalise une opération (E12-E16) de contrôle parental sur ledit contenu (Cᵢ) en fonction des informations sur la nature du contenu et transmet un résultat du contrôle parental (E17, E18) à l'agent de contrôle (40) afin d'autoriser ou refuser la lecture du contenu selon que le résultat est positif ou négatif.

2. Procédé selon la revendication 1, dans lequel l'identifiant de module de gestion de contrôle parental est présent dans la requête transmise par le terminal au serveur pour obtenir le contenu.

3. Procédé selon la revendication 1, dans lequel l'identifiant de module de gestion de contrôle parental est transmis par le terminal au serveur lors d'une étape préalable de configuration et est stocké par le serveur dans une base de données en vue de répondre à des requêtes ultérieures du terminal pour recevoir des contenus.

4. Procédé selon la revendication 1, dans lequel, l'agent client (40) transmet la demande d'autorisation (REQ_AUTH(Cᵢ)) pour utiliser le contenu (Cᵢ) vers un module (41) de gestion de contrôle parental situé dans le terminal d'utilisateur (4).

5. Procédé selon la revendication 4, dans lequel, lors de l'opération de contrôle parental, le module de gestion de contrôle parental dialogue avec un serveur distant, à travers un réseau de communication.

6. Procédé selon la revendication 1, dans lequel, l'agent client transmet la demande d'autorisation pour utiliser le contenu vers un module de gestion de contrôle parental hébergé par un serveur distant, à travers un réseau de communication.

7. Procédé selon la revendication 1, dans lequel, il est prévu une étape d'authentification du module de gestion de contrôle parental par l'agent client de contrôle de l'utilisation du contenu.

8. Terminal de communication comprenant
- des moyens de communication (45, 46) avec un serveur (1) agencés pour transmettre au serveur une requête pour obtenir un contenu et pour recevoir, en réponse, le contenu (Cᵢ) sous forme chiffrée ainsi qu'une licence associée (L(Cᵢ)) de gestion de droits numériques contenant des conditions (COND_USE1, COND_USE2) d'utilisation du contenu (Cᵢ),
- des moyens (43) de lecture du contenu et
- un agent de contrôle de l'utilisation du contenu, agencé en cas de commande de lecture dudit contenu par les moyens de lecture, pour vérifier (E12, E14-E16, E19) les conditions d'utilisation du contenu, présentes dans la licence (L(Cᵢ)),
dans lequel :
- les moyens de communication sont agencés pour transmettre au serveur un identifiant de module logiciel (41) de gestion de contrôle parental,
- la licence reçue (L(Cᵢ)), associée au contenu (Cᵢ), contenant une condition subordonnant l'utilisation du contenu (Cᵢ) à la réalisation préalable d'une opération de contrôle parental et l'identifiant dudit module de gestion de contrôle parental transmis par le terminal au serveur, l'agent client de contrôle (40) est agencé pour
∘ déterminer que l'utilisation du contenu (Cᵢ) est subordonnée à une obligation (COND_USE1) de réaliser une opération de contrôle parental sur le contenu (Cᵢ) et
∘ transmettre une demande d'autorisation (REQ_AUTH(Cᵢ)) pour utiliser le contenu (Cᵢ) au module de gestion de contrôle parental (41), identifié par l'identifiant du module de gestion de contrôle parental extrait de la licence (L(Cᵢ)), ladite requête comprenant des informations sur la nature du contenu, extraites par l'agent client de contrôle du contenu ou de la licence,
∘ autoriser ou refuser la lecture du contenu en fonction des informations sur la nature du contenu par les moyens de lecture selon que le résultat du contrôle parental est positif ou négatif.

9. Terminal selon la revendication 8, comprenant ledit module de gestion de contrôle parental.

## Patentansprüche

1. Verfahren zum Erhalt und zur Überwachung der Verwendung eines Inhalts (Cᵢ) durch ein Endgerät, wobei das Endgerät einen Client Agent (40) zur Überwachung der Verwendung des Inhalts umfasst, wobei
- in Reaktion auf eine Anforderung, die an einen Server gesendet wurde, das Endgerät (4) den Inhalt (Cᵢ) in verschlüsselter Form sowie eine zugeordnete Lizenz (L(Cᵢ)) zur Verwaltung digitaler Rechte empfängt, wobei diese Lizenz (L(Cᵢ)) Bedingungen (COND_USE1, COND_USE2) der Verwendung des Inhalts (Cᵢ) enthält,
- im Falle eines Befehls zum Lesen des Inhalts der Client Agent zur Überwachung (40) die Bedingungen der Verwendung des Inhalts überprüft (E12, E14-E16, E19), die in der Lizenz (L(Cᵢ)) vorhanden sind,
- das Endgerät an den Server eine Kennung eines Kinderschutz-Verwaltungssoftwaremoduls (41) sendet,
- die empfangene Lizenz (L(Cᵢ)), die dem Inhalt (Cᵢ) zugeordnet ist,
∘ eine Bedingung, welche die Verwendung des Inhalts (Cᵢ) von der vorausgehenden Durchführung eines Kinderschutz-Prüfungsvorgangs abhängig macht, und
∘ die gesendete Kennung des Kinderschutz-Verwaltungsmoduls enthält,
- bei der Überprüfung der Verwendungsbedingungen des Inhalts der Client Agent zur Überwachung (40) bestimmt, dass die Verwendung des Inhalts (Cᵢ) von einer Verpflichtung (COND_USE1) abhängig ist, einen Kinderschutz-Prüfungsvorgang an dem Inhalt (Cᵢ) durchzuführen, und mithilfe der aus der Lizenz (L(Cᵢ)) extrahierten Kennung des Kinderschutz-Verwaltungsmoduls eine Genehmigungsanfrage (REQ_AUTH(Cᵢ)) zum Verwenden des Inhalts (Cᵢ) an das Kinderschutz-Verwaltungsmodul (41) sendet, wobei diese Anforderung Informationen über die Art des Inhalts umfasst, die durch den Client Agent zur Überwachung aus dem Inhalt oder aus der Lizenz extrahiert wurden,
- das Kinderschutz-Verwaltungsmodul (41) einen Kinderschutz-Prüfungsvorgang (E12-E16) an dem Inhalt (Cᵢ) in Abhängigkeit von den Informationen über die Art des Inhalts durchführt und ein Ergebnis der Kinderschutzprüfung (E17, E18) an den Überwachungs-Agent (40) sendet, um je nachdem, ob das Ergebnis positiv oder negativ ist, das Lesen des Inhalts zu genehmigen oder zu verweigern.

2. Verfahren nach Anspruch 1, wobei die Kennung des Kinderschutz-Verwaltungsmoduls in der Anforderung vorhanden ist, die von dem Endgerät an den Server gesendet wird, um den Inhalt zu erhalten.

3. Verfahren nach Anspruch 1, wobei die Kennung des Kinderschutz-Verwaltungsmoduls in einem vorausgehenden Konfigurationsschritt von dem Endgerät an den Server gesendet wird und von dem Server in einer Datenbank gespeichert wird, um auf spätere Anforderungen des Endgerätes zum Empfangen der Inhalte zu antworten.

4. Verfahren nach Anspruch 1, wobei der Client Agent (40) die Genehmigungsanfrage (REQ_AUTH(Cᵢ)) zum Verwenden des Inhalts (Cᵢ) an ein Kinderschutz-Verwaltungsmodul (41) sendet, das sich in dem Benutzerendgerät (4) befindet.

5. Verfahren nach Anspruch 4, wobei während des Kinderschutz-Prüfungsvorgangs das Kinderschutz-Verwaltungsmodul über ein Kommunikationsnetz einen Dialog mit einem entfernten Server führt.

6. Verfahren nach Anspruch 1, wobei der Client Agent die Genehmigungsanfrage zum Verwenden des Inhalts über ein Kommunikationsnetz an ein Kinderschutz-Verwaltungsmodul sendet, das von einem entfernten Server gehostet wird.

7. Verfahren nach Anspruch 1, wobei ein Schritt der Authentifizierung des Kinderschutz-Verwaltungsmoduls durch den Client Agent zur Überwachung der Verwendung des Inhalts vorgesehen ist.

8. Kommunikationsendgerät, umfassend:
- Mittel zur Kommunikation (45, 46) mit einem Server (1), die dafür ausgelegt sind, an den Server eine Anforderung zum Erhalt eines Inhalts zu senden und als Antwort den Inhalt (Cᵢ) in verschlüsselter Form sowie eine zugeordnete Lizenz (L(Cᵢ)) zur Verwaltung digitaler Rechte, welche Bedingungen (COND_USE1, COND_USE2) der Verwendung des Inhalts (Cᵢ) enthält, zu empfangen,
- Mittel (43) zum Lesen des Inhalts und
- einen Agent zur Überwachung der Verwendung des Inhalts, der dafür ausgelegt ist, im Falle eines Befehls zum Lesen des Inhalts durch die Lesemittel die Bedingungen der Verwendung des Inhalts zu überprüfen (E12, E14-E16, E19), die in der Lizenz (L(Cᵢ)) vorhanden sind,
wobei:
- die Kommunikationsmittel dafür ausgelegt sind, an den Server eine Kennung eines Kinderschutz-Verwaltungssoftwaremoduls (41) zu senden,
- wenn die empfangene Lizenz (L(Cᵢ)), die dem Inhalt (Cᵢ) zugeordnet ist, eine Bedingung, welche die Verwendung des Inhalts (Cᵢ) von der vorausgehenden Durchführung eines Kinderschutz-Prüfungsvorgangs abhängig macht, und die von dem Endgerät an den Server gesendete Kennung des Kinderschutz-Verwaltungsmoduls enthält, der Client Agent zur Überwachung (40) dafür ausgelegt ist,
∘ zu bestimmen, dass die Verwendung des Inhalts (Cᵢ) von einer Verpflichtung (COND_USE1) abhängig ist, einen Kinderschutz-Prüfungsvorgang an dem Inhalt (Cᵢ) durchzuführen, und
∘ eine Genehmigungsanfrage (REQ_AUTH(Cᵢ)) zum Verwenden des Inhalts (Cᵢ) an das Kinderschutz-Verwaltungsmodul (41) zu senden, das durch die aus der Lizenz (L(Cᵢ)) extrahierte Kennung des Kinderschutz-Verwaltungsmoduls identifiziert wurde, wobei diese Anforderung Informationen über die Art des Inhalts umfasst, die durch den Client Agent zur Überwachung aus dem Inhalt oder aus der Lizenz extrahiert wurden,
∘ das Lesen des Inhalts durch die Lesemittel in Abhängigkeit von den Informationen über die Art des Inhalts zu genehmigen oder zu verweigern, je nachdem, ob das Ergebnis der Kinderschutzprüfung positiv oder negativ ist.

9. Endgerät nach Anspruch 8, welches das Kinderschutz-Verwaltungsmodul umfasst.

## Claims

1. Method for obtaining and controlling the use of content (Cᵢ) by a terminal, said terminal comprising a client agent (40) for controlling the use of the content, in which
- in response to a request transmitted to a server, the terminal (4) receives said content (Cᵢ) in encrypted form together with an associated digital rights management licence (L(Cᵢ)), said licence (L(Cᵢ)) containing conditions (COND_USE1, COND_USE2) for the use of the content (Cᵢ),
- in case of a command to read said content, the controlling client agent (40) checks (E12, E14-E16, E19) the conditions of use of the content, present in the licence (L(Cᵢ)),
- the terminal transmits to the server a parental control management software module identifier (41),
- the received licence (L(Cᵢ)), associated with the content (Cᵢ), contains
∘ a condition making the use of the content (Cᵢ) conditional upon the prior performance of a parental control operation and
∘ the identifier of said parental control management module transmitted,
- when checking the conditions of use of the content, the controlling client agent (40) determines that the use of the content (Cᵢ) is conditional upon an obligation (COND_USE1) to perform a parental control operation on the content (Cᵢ) and, using the identifier of the parental control management module extracted from the licence (L(Cᵢ)), it transmits a request for authorization (REQ_AUTH(Cᵢ)) to use the content (Cᵢ) to the parental control management module (41), said request comprising information on the nature of the content, extracted by the client agent controlling the content or the licence,
- the parental control management module (41) performs a parental control operation (E12-E16) on said content (Cᵢ) according to the information on the nature of the content and transmits a result of the parental control (E17, E18) to the controlling agent (40) in order to authorize or deny the reading of the content depending on whether the result is positive or negative.

2. Method according to Claim 1, in which the parental control management module identifier is present in the request transmitted by the terminal to the server to obtain the content.

3. Method according to Claim 1, in which the parental control management module identifier is transmitted by the terminal to the server in a preliminary configuration step and is stored by the server in a database in order to respond to subsequent requests from the terminal to receive contents.

4. Method according to Claim 1, in which the client agent (40) transmits the request for authorization (REQ_AUTH(Cᵢ)) to use the content (Cᵢ) to a parental control management module (41) located in the user terminal (4).

5. Method according to Claim 4, in which, in the parental control operation, the parental control management module dialogs with a remote server, through a communication network.

6. Method according to Claim 1, in which the client agent transmits the request for authorization to use the content to a parental control management module hosted by a remote server, through a communication network.

7. Method according to Claim 1, in which a step is provided for authenticating the parental control management module by the client agent controlling the use of the content.

8. Communication terminal comprising
- means (45, 46) of communication with a server (1) arranged to transmit to the server a request to obtain content and to receive, in response, the content (Cᵢ) in encrypted form together with an associated digital rights management licence (L(Cᵢ)) containing conditions (COND_USE1, COND_USE2) for the use of the content (Cᵢ),
- means (43) for reading the content and
- an agent for controlling the use of the content, arranged, in case of a command to read said content by the reading means, to check (E12, E14-E16, E19) the conditions of use of the content, present in the licence (L(Cᵢ)),
in which
- the communication means are arranged to transmit to the server a parental control management software module (41) identifier,
- the received licence (L(Cᵢ)), associated with the content (Cᵢ), containing a condition making the use of the content (Cᵢ) conditional upon the prior performance of a parental control operation and the identifier of said parental control management module transmitted by the terminal to the server, the controlling client agent (40) is arranged to
∘ determine that the use of the content (Cᵢ) is conditional upon an obligation (COND_USE1) to perform a parental control operation on the content (Cᵢ), and
∘ transmit a request for authorization (REQ_AUTH(Cᵢ)) to use the content (Cᵢ) to the parental control management module (41), identified by the identifier of the parental control management module extracted from the licence (L(Cᵢ)), said request comprising information on the nature of the content, extracted by the client agent controlling the content or the licence,
∘ authorize or deny the reading of the content according to the information on the nature of the content by the reading means depending on whether the result of the parental control is positive or negative.

9. Terminal according to Claim 8, comprising said parental control management module.
